# EUROPEAN PATENT APPLICATION

(11) **EP 1 547 760 A1**
(43) Date of publication of application: **29.06.2005**
(21) Application number: 04257399.8
(22) Date of filing: 30.11.2004
(51) Int. Cl.: B32B 1/08, B65D 5/44, B65D 5/50, B65D 81/05, B31F 7/00, B31F 1/00

(54) **Multi-ply linear draw support post**

(30) Priority: 23.12.2003 US 744387
(71) Applicant: Sonoco Development, Inc., Hartsville, South Carolina 29550 (US)
(72) Inventor: Qiu, Yanping, Middleton, Wisconsin 53562 (US); Niu, Xiaokai, Hartsville, South Carolina 29550 (US); Schock, Robert Michael, Hartsville, South Carolina 29550 (US)
(74) Representative: Kinsler, Maureen Catherine

(57) **Abstract**

Paperboard support posts are formed by linearly advancing paperboard plies to a mandrel and wrapping the plies about the mandrel (M) with the ply edges parallel to the mandrel axis, the plies being adhered together to form a tube (20) that is linearly advanced along the mandrel and then cut into desired lengths. In one embodiment, the tube is a multi-grade structure having one or more relatively low-grade plies in the middle of the tube wall and relatively higher-grade plies toward the inside and outside of the tube. In another embodiment, one or more intermediate plies (30,32,146) are embossed or corrugated to increase their effective caliper.

## Description

### FIELD OF THE INVENTION

The present invention relates to support posts for use in packaging an object or group of objects in a carton or the like, the support posts being used for supporting axial loads imposed on the carton, and optionally providing lateral cushioning or protection as well, such as at comers of a packaged object. The invention relates in particular to such support posts formed as tubular structures from paperboard materials.

### BACKGROUND OF THE INVENTION

When packaging one or more objects in a carton or other package that itself does not provide sufficient strength for supporting axial loads and/or for cushioning the object(s) against lateral impacts, particularly at the comers, it is known to include support posts and/or comer protectors in the package to provide the needed axial load support and/or lateral impact protection. Such support posts or comer protectors are commonly made from paperboard materials One known type of comer protector or support post is formed by convolutely winding a sheet of paperboard for a plurality of turns about a mandrel and adhering the adjacent windings together to form a multi-layer tube. The tube while still wet can be deformed into a desired cross-sectional shape and allowed to dry and set.

U.S. Patent No. 6,186,329 describes a multi-grade convolutely wound comer protector. The comer protector is formed by first preparing a paperboard sheet from three separate pieces of paperboard of different grades. In particular, a first piece of paperboard of relatively higher grade (i.e., higher density and higher stiffness for a given thickness) is joined at one edge to the edge of a second piece of paperboard of relatively lower grade (i.e., lower density and lower stiffness for a given thickness). An opposite edge of the second piece is joined to a third piece of paperboard of higher grade. The paperboard sheet is convolutely wound about a mandrel to build up a plurality of layers or turns, which layers are adhered together. The resulting tube has a wall made up of at least three layers at any given circumferential location, wherein inner and outer layers comprise the higher-grade paperboard and one or more intermediate layers comprise the lower-grade paperboard.

The process of the'329 patent, while effective for producing multi-grade tube structures, is necessarily a batch type of process wherein a single tube is made at a time; the batch process is inherently inefficient, particularly in view of the requirement of preparing the starting sheet from three separate pieces of paperboard. The process would be even less efficient if it were used to produce tubes having more-complicated ply arrangements, such as high/low/high/low/high grade, for example.

### SUMMARY OF THE INVENTION

The present invention addresses the above needs and achieves other advantages, by providing a multi-ply support post and a method of making multi-ply support posts using a continuous type of production process. In accordance with one embodiment of the invention, there is provided a method for making a multi-ply support post, comprising the steps of:
providing a mandrel that extends along an axis;
advancing an inner paperboard ply parallel to the axis of the mandrel while wrapping the inner ply about the mandrel such that opposite side edges of the inner ply are proximate each other and are parallel to the axis of the mandrel;
advancing from one to a plurality of intermediate paperboard plies parallel to the axis of the mandrel while wrapping the or each intermediate ply about the mandrel such that opposite side edges of the or each intermediate ply are proximate each other and are parallel to the axis of the mandrel;
advancing an outer paperboard ply parallel to the axis of the mandrel while wrapping the outer ply about the mandrel such that opposite side edges of the outer ply are proximate each other and are parallel to the axis of the mandrel; and
joining the inner, intermediate, and outer plies together with adhesive to form a tube on the mandrel, the tube being drawn linearly along the mandrel;
wherein the inner and outer plies comprise relatively higher-grade paperboard, and at least one intermediate ply comprises a relatively low-grade paperboard.

Thus, the tube is formed continuously on the mandrel and is drawn linearly along the mandrel. At a downstream station, the tube can be cut into desired lengths. The tubes can then be allowed to sit for a period of time to set the adhesive; the setting process can be hastened by heating the tubes in an oven or the like, if desired; the resulting tubes thus have the same cross-sectional shape as the mandrel on which they were formed. Alternatively, while the tubes are still wet, the tubes can be deformed to a different cross-sectional shape (e.g., a generally L-shaped configuration, in the case where the tubes are to be used as comer protectors) and can then be allowed or caused to set. The continuous production process is more-efficient than the batch process used in convolute winding, and also allows substantial freedom in arranging various numbers and grades of plies in various orders in the tube wall.

In some embodiments of the invention, a plurality of intermediate low-grade plies can be included in the tube wall. The low-grade plies can all be contiguous, or alternatively can be separated by intervening higher-grade plies.

The inclusion of lower-grade paperboard material in the tube wall allows the cost of the support post to be reduced. At the same time, the bending stiffness of the tube is not substantially compromised because the lower-grade paperboard material is located in the middle of the tube wall, whereas the primary contributors to bending stiffness are the higher-grade plies located inwardly and outwardly of the low-grade ply or plies.

In another embodiment of the invention, a linear draw support post comprises a plurality of separate paperboard plies wrapped one upon another about an axis and adhered together to form a tube, wherein opposite edges of each ply extend parallel to the axis, and wherein at least one ply located radially between two other plies is embossed with a plurality of discrete embossments spaced apart along length and width directions of the ply for increasing an effective caliper of the ply. The embossments increase the effective caliper of the ply in the tube wall; as a result, the plies on opposite sides of the embossed ply are spaced farther apart, without substantially increasing the mass of the embossed ply relative to a non-embossed ply. The increased spacing between the inner and outer plies contributes to an increase in bending stiffness of the tube, which leads to an increased resistance to buckling of the tube under axial loads, and increased side wall compressive stiffness. The embossed ply can be of the same grade as the other plies in the tube, or can be a relatively lower grade than other plies.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic depiction of an apparatus and process for making a multi-grade linear draw support post in accordance with one embodiment of the invention;
FIG. 2 is a fragmentary cross-sectional view through a support post formed by the process of FIG. 1;
FIG. 3 shows a comer protector in accordance with an embodiment of the invention;
FIG. 4 illustrates an embossed ply for incorporation into a support post in accordance with the invention;
FIG. 5 shows a cross-sectional view through a support post in accordance with another embodiment of the invention, having a central embossed ply;
FIG. 6 is a diagrammatic depiction of a process for embossing a ply in accordance with the invention;
FIG. 7 is a cross-sectional view through a support post in accordance with yet another embodiment of the invention, having two embossed plies separated by an intervening non-embossed ply;
FIG. 8 is a cross-sectional view through a support post in accordance with a further embodiment of the invention, wherein a corrugated ply is included in the wall of the post;
FIG. 9 is a cross-sectional view through a support post in accordance with another embodiment of the invention, having two corrugated plies separated by an intervening non-corrugated ply;
FIG. 10 depicts an apparatus and process for making a multi-grade linear draw support post in accordance with another embodiment of the invention, having a narrow reinforcing ply; and
FIG. 11 is a cross-sectional view of a support post produced in accordance with the process of FIG. 10.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

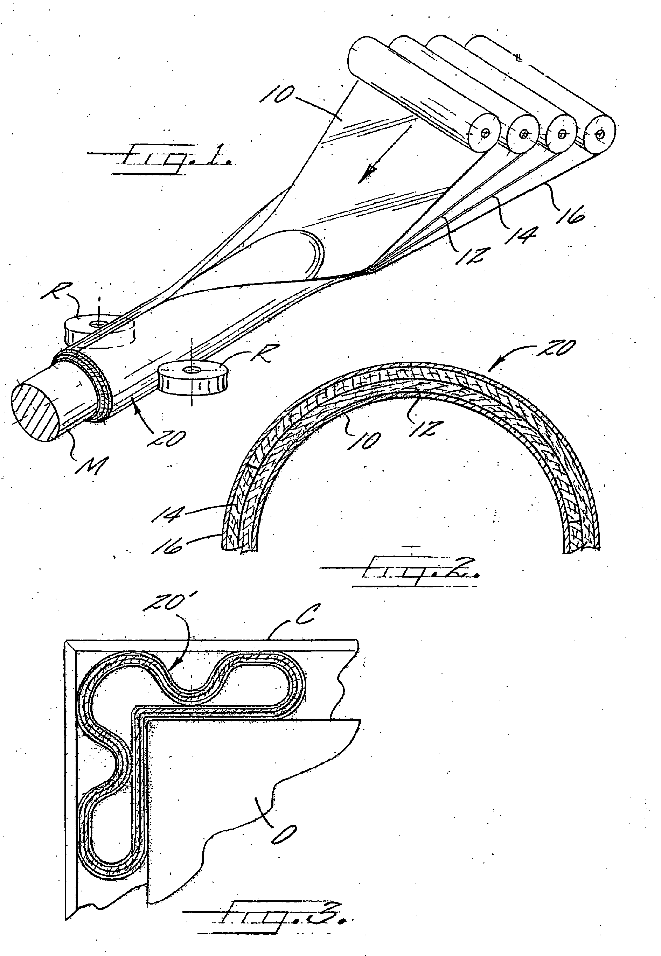

An apparatus and process for making a multi-grade linear draw support post in accordance with one embodiment of the invention is shown in FIG. 1. The apparatus includes a mandrel M that extends along an axis and has a substantially constant cross-sectional size and shape over most of its length. The mandrel can have a circular cross-section, as shown, or can have a non-circular cross-section. The apparatus also includes a tube-conveying arrangement, such as a pair of opposed rollers R (or other rotary devices such as belts, etc.) for frictionally engaging opposite sides of a tube being formed on the mandrel, such that operation of the tube-conveying arrangement causes the tube to be linearly drawn along the mandrel. As the tube is drawn along the mandrel, the various plies of which the tube is constructed are drawn from their respective supply rolls, as shown. The apparatus also includes a wrapping arrangement (not shown), such as a plow or the like, that is operable to manipulate each ply so as to wrap the ply about the mandrel, or about the ply or plies already wrapped about the mandrel. The apparatus further includes adhesive applicators (not shown) for applying adhesive to the confronting surfaces of adjacent plies before the plies are wrapped one upon another about the mandrel. Such adhesive applicators are known in the art.

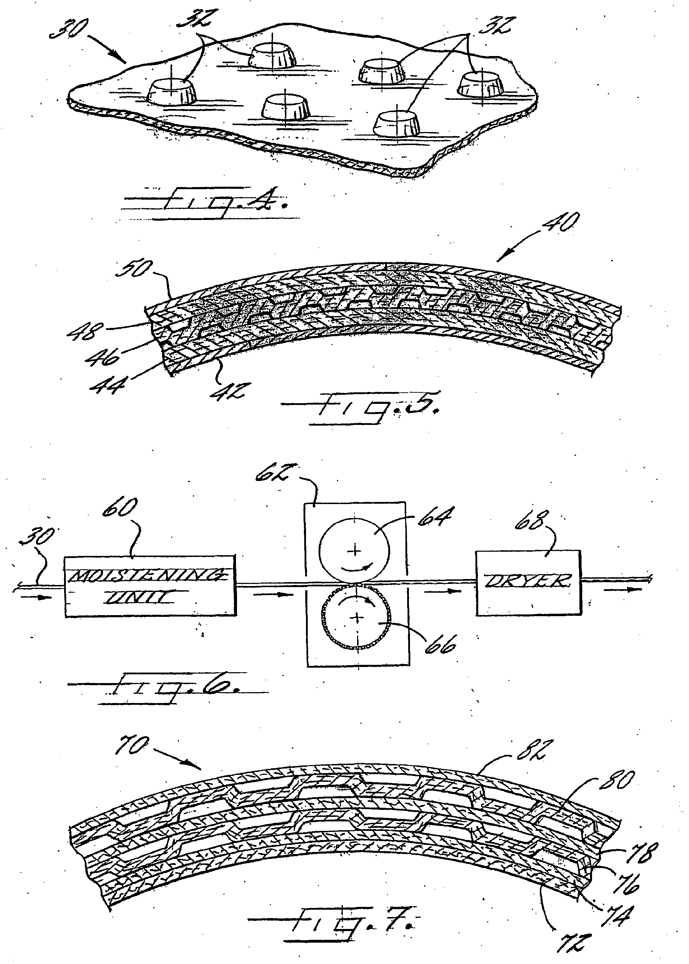

Thus, in the illustrated example in FIG. 1, and as shown in greater detail in FIG. 2, a tube **20** is formed from four plies **10, 12, 14, 16** each drawn from its own respective supply roll. Each ply has a width approximately equal to the curvilinear distance (i.e., the mandrel circumference, in the case of a circular mandrel as shown) about the outer surface of the mandrel ***M***, so that the width of the ply wraps substantially fully about the mandrel. The opposite side edges of each ply extend parallel to the axis of the mandrel and are proximate each other; the edges may form a butt joint, or there may be a small gap or a small overlap therebetween. Preferably the edges of adjacent plies are circumferentially staggered relative to each other so that the ply joints are not aligned with each other, as shown for plies **12** and **14** in FIG. 2.

Paper is available in a wide variety of grades. In general, paper stiffness (for a given thickness) can be improved by mechanical refining of paperboard pulps. Thus, a well-beaten pulp generally produces a stiffer grade of paper compared to a lightly beaten pulp, at the same thickness. In addition, paper stiffness can be improved by compressing the paperboard during manufacture by running the web through a set of high-pressure nip rolls. Further, paperboard stiffness is influenced by fiber type and quality. As a general rule, stiffer paperboard sheets have a higher density than less-stiff paperboard sheets, at the same thickness. Stated differently, the above treatments generally result in an increase in paperboard density along with the increase in paperboard stiffness. The higher-density, higher-stiffness papers are also more costly.

In accordance with the invention, the inner ply **10** and the outer ply **16** comprise paperboard of relatively high stiffness and high density, also referred to as high-grade paperboard. Through theoretical calculations and empirical testing, it can be shown that the lengthwise bending stiffness of a multi-layer tube is largely a function of two factors, namely, the stiffness of the ply or plies nearest the inner and outer surfaces of the tube, and the radial spacing between these plies. The stiffness of the plies, for a given thickness, correlates with the paperboard grade; thus, a given ply of high-grade paperboard has a greater stiffness than an otherwise equivalent ply of lower-grade paperboard. Placing high-grade plies toward the inside and outside of a tube tends to maximize the contribution these plies make toward the bending stiffness of the tube.

On the other hand, the stiffness of the intermediate plies in the middle of the tube wall tends to contribute only weakly toward the overall bending stiffness of the tube, but these plies do serve the important function of spacing the high-grade inner and outer plies apart from each other. The intermediate plies thus are roughly analogous to the web of an I-beam, which spaces apart the two flanges that contribute most of the bending stiffness of the beam. All other things being equal, the farther apart the inner and outer plies are spaced, the greater will be the bending stiffness of the tube. Accordingly, in accordance with the invention, one or more of the intermediate plies are selected to be lower-grade paperboard, since the contribution these plies make to the tube's stiffness is relatively slight compared with the inner and outer plies' contributions.

Thus, one or both of the intermediate plies **12** and **14** comprise paperboard of relatively lower stiffness and density, i.e., low-grade paperboard. The usage of such low-grade paperboard in the middle of the tube wall does not substantially impair the bending stiffness of the tube, relative to a tube formed entirely of higher-grade paperboard, and can result in significant cost savings.

The tube **20**, once formed on the mandrel *M*, is linearly advanced along the mandrel to a downstream cutting station (not shown), where the tube is cut into desired lengths. The resulting tubes can then be held to allow the adhesive to set, such that the tubes have the same shape as when they were removed from the mandrel. The tubes can be used as support posts in a package for carrying axial loads exerted on the package, such as when multiple packages are stacked upon one another.

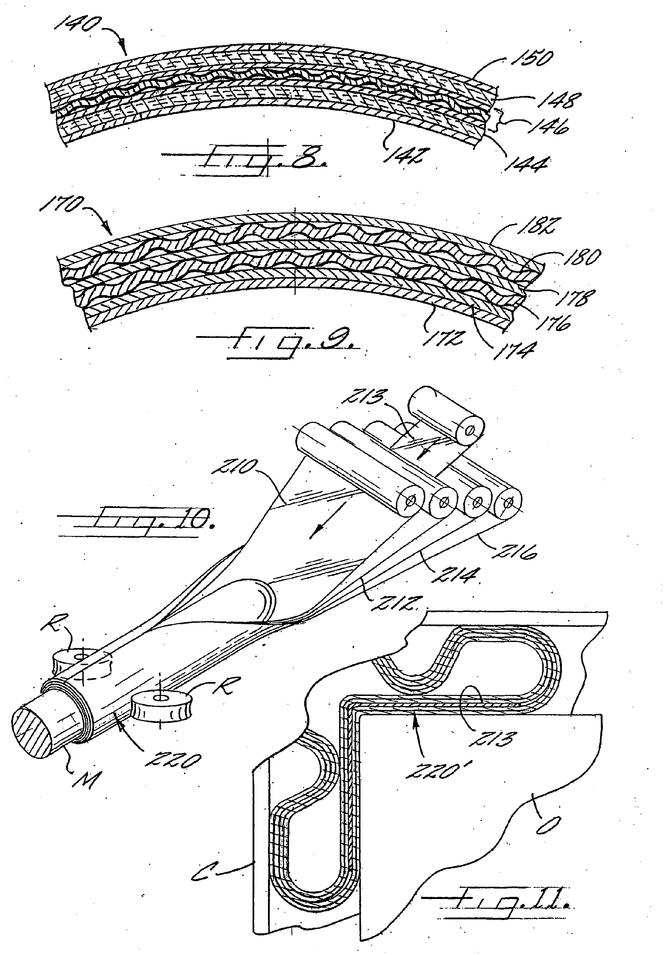

Alternatively, after the tubes have been cut into lengths, or during the cutting process, and while the adhesive is still wet, the tubes can be deformed into a different cross-sectional shape and then allowed to dry. As an example, FIG. 3 shows a tube **20**' deformed into a generally L-shaped cross-section, for use as a support post and comer protector in a carton ***C*** to support axial loads as well as to protect the comer of a packaged object ***O***. The formation and uses of such comer protectors are described in U.S. Patent No. 6,186,329, incorporated herein by reference, and hence are not further described herein.

The invention is not limited to four-ply support posts, nor is it limited to posts having only one high-grade ply radially inward and radially outward of the intermediate low-grade ply or plies. Support posts in accordance with the invention can have from one to a plurality of high-grade plies located radially inward of the low-grade ply or plies, and can have from one to a plurality of high-grade plies located radially outward of the low-grade ply or plies. As noted, one or more intermediate low-grade plies can be included. When a plurality of low-grade plies are included, such plies can all be contiguous, or alternatively there can be intervening high-grade plies between them.

In another aspect of the invention, the radial spacing between inner and outer plies in a support post can be enhanced with virtually no addition of mass to the support post, by embossing one or more of the intermediate plies. FIG. 4 shows one example of an embossed ply **30** having a plurality of discrete embossments **32** that project from one side of the ply. As used herein, the term "emboss" denotes a process wherein a localized region of the ply is forced to deform into a recess or depression in a surface of a tool such as a die or roller such that the deformation remains after the deforming force is removed; "embossment" denotes the localized deformed region of the ply so made. The embossments are spaced apart along two orthogonal directions (and therefore spaced apart along both length and width directions of the ply). The embossments can have various shapes, such as truncated cones (as shown), truncated pyramids, etc. Embossing is generally carried out by deforming the ply while the ply is wet or moist and the ply is then dried, as further described below. The embossments act as spacers that abut an adjacent ply; as long as the embossments are not spaced too far apart, the adjacent ply will stand off from the regions of the embossed ply located between the embossments, and thus void spaces will exist between the embossed ply and the adjacent ply. When the embossed ply is incorporated into a support post, therefore, the middle of the tube wall will have void spaces and thus will have a lower density that it otherwise would have. The effective caliper of the embossed ply is greater than an equivalent non-embossed ply, and hence the plies on either side of the embossed ply are spaced farther apart than they otherwise would be. As a result, the bending stiffness of the support post can be enhanced.

FIG. 5 shows an example of a support post **40** having a total of five plies, including an inner ply **42**, three intermediate plies **44, 46, 48**, and an outer ply **50**. The middle ply **46** is embossed; in this case, the embossments project from both sides of the ply, as opposed to the single-sided embossing in FIG. 4. The five plies can all be of the same grade of paperboard, or can be of different grades. In one embodiment, the embossed ply 46 can be a relatively low-grade paperboard while the rest of the plies are relatively higher in stiffness. In another embodiment, all of the intermediate plies **44, 46**, and **48** can be relatively low in stiffness while the inner ply **42** and outer ply **50** are relatively higher in stiffness.

A paperboard ply can be embossed using a process diagrammatically represented in FIG. 6. The ply **30** is first moistened in a moistening unit **60** to loosen the fiber bonds. The moistened ply is passed through an embosser **62**, which may comprise a pair of opposed embossing rolls **64, 66** that form a nip through which the moistened ply is passed. The roll **64** defines a plurality of recesses or depressions in its outer surface, and the roll **66** has a plurality of corresponding projections that are in registration with the depressions in the roll **64** and are configured to deform localized regions of the moistened ply into the depressions in the roll **64**. After exiting the embosser, the ply is dried in a dryer **68**. It is possible to omit the moistening step if the ply is embossed while still wet during the process of producing the paperboard on the paper making machine.

As noted, the invention is not limited to support posts having a single embossed ply. FIG. 7 shows an alternative embodiment of a tube **70** having two embossed plies and four unembossed plies. More particularly, the tube wall has a radially inner region made up of two adjacent unembossed plies **72, 74**. A radially intermediate region of the tube wall is made up of three plies, which comprise an inner embossed ply **76** that is adjacent the ply **74**, a middle unembossed ply **78** immediately outward of and contiguous with the inner embossed ply **76**, and an outer embossed ply **80** immediately outward of and contiguous with the ply **78**. An outermost unembossed ply **82** is wrapped about the outer embossed ply **80**. Thus, each embossed ply is sandwiched between two unembossed plies. Various combinations of paperboard grades can be used for the different plies in the tube.

In the practice of the invention, a ply can be drawn from a supply roll as an ordinary unembossed ply and can be embossed using a process similar to that shown in FIG. 6 as the ply is being advanced to the mandrel ***M***. Alternatively, an embossed ply could be prepared beforehand and could be supplied in the form of a roll of embossed material, such that the embossed ply would simply be drawn from the supply roll and advanced to the mandrel.

Embossing is not the only way that can be used, in accordance with the invention, to "artificially" increase the effective thickness of intermediate plies in a support post. A similar result can be achieved by corrugating one or more plies. To maximize the axial stiffness of the ply or plies, the corrugations or flutes should extend parallel to the axis of the post. FIG. 8 shows one embodiment of a support post having an inner ply **142**, three intermediate plies **144, 146, 148**, and an outer ply **150**. The middle ply **146** is corrugated, with the flutes extending parallel to the axis of the post (perpendicular to the plane of the figure), and actually comprises a double-faced corrugated board in which a corrugated layer is adhered on its opposite faces to non-corrugated paperboard layers. The double-faced corrugated board can be prepared in advance and supplied in roll form, although it is also possible to form it in-line during the manufacture of the linear draw support post. The various plies can all be of the same grade of paperboard, or can be of different grades. In one embodiment, the corrugated ply 146 can be a relatively low-grade paperboard while the rest of the plies are relatively higher in stiffness. In another embodiment, all of the intermediate plies **144, 146**, and **148** can be relatively low in stiffness while the inner ply **142** and outer ply **150** are relatively higher in stiffness.

FIG. 9 depicts another embodiment of a support post **170** having two corrugated plies and four non-corrugated plies. More particularly, the tube wall has a radially inner region made up of two adjacent non-corrugated plies **172,174**. A radially intermediate region of the tube wall is made up of three plies, which comprise an inner corrugated ply **176** that is adjacent the ply **174**, a middle non-corrugated ply **178** immediately outward of and contiguous with the inner corrugated ply **176**, and an outer corrugated ply **180** immediately outward of and contiguous with the ply **178**. An outermost non-corrugated ply **182** is wrapped about the outer corrugated ply **180**. Thus, each corrugated ply is sandwiched between two non-corrugated plies. Various combinations of paperboard grades can be used for the different plies in the tube. Each of the corrugated plies can be pre-adhered to at least one adjacent non-corrugated ply prior to advancing the plies to the forming mandrel. For example, the corrugated ply **180** and the adjacent non-corrugated ply **178** can be pre-adhered to each other, forming a so-called single-faced corrugated board; this board can be drawn from a supply roll (not shown) of single-faced board and advanced to the mandrel, or can be prepared in-line. Likewise, the plies **174** and **176** can form a single-faced board drawn from a supply roll (not shown) or prepared in-line. Alternatively, the plies **180** and **182** could comprise a single-faced corrugated board, and the plies **174, 176**, and **178** could comprise a double-faced corrugated board. It is thus possible to incorporate various combinations of non-corrugated, corrugated, single-faced, and/or double-faced ply arrangements in a post in accordance with the invention.

It is also within the scope of the invention to reinforce one or more particular regions of a support post wall with one or more paperboard plies having a narrower width than the other plies making up the post, so that the region is thickened relative to other portions of the wall. FIG. 10 shows an apparatus and process for accomplishing this in accordance with one embodiment of the invention. The process is generally similar to that described in connection with FIG. 1. A plurality of plies **210, 212, 213, 214**, and **216** are linearly advanced to the mandrel ***M*** and wrapped around the mandrel. As previously noted in the discussion of FIG. 1, although the plies are shown as all being aligned in the circumferential direction about the mandrel, in reality the plies would be staggered so that the seams between edges of the plies are not aligned with each other from one layer to the next in the resulting tube **220**. The ply **213** is substantially narrower than the other plies, and is located with respect to the later-form support post **220'** (FIG. 11) so as to thicken and thereby reinforce a particular region of the post. For example, as shown in FIG. 11, the narrow ply **213** is located in the inside comer region of the post **220'** to thicken and reinforce this region. Of course, more than one narrow ply can be employed in a given region of a post, or a post can include more than one reinforced region each having one or more narrow plies for reinforcement. A region having one or more narrow reinforcing plies will tend to have greater bending stiffness than it would have absent the reinforcing ply or plies. Thus, for example, a region of a support post that tends to experience the largest bending stresses in use, or a region that inherently is relatively weak in bending because of its geometry, can be reinforced with one or more narrow plies in accordance with the invention.

Based on the foregoing description, it will be appreciated that the continuous linear draw production process of the invention is more-efficient than the batch convolute winding process used in the prior-art, and also allows substantial freedom in arranging various numbers and grades of plies in various orders in the tube wall. The multi-grade linear draw support posts of the invention enable axial load-bearing strength to be substantially maintained while substituting a proportion of less-costly low-grade paperboard for the more-costly high-grade paperboard that might otherwise be required. Additionally, the linear draw support posts having one or more embossed or corrugated plies also allow a reduction in the amount of paperboard material required to form a support post. The use of narrow reinforcing plies in a support post allows specific regions of a post to be reinforced for greater bending stiffness and/or cushioning.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A multi-grade linear draw support post for supporting axial loads imposed on the post, the support post comprising:
a plurality of separate paperboard plies wrapped one upon another about an axis and adhered together to form a tube, wherein opposite edges of each ply extend parallel to the axis;
the plies including a relatively low-grade ply radially positioned between other relatively higher-grade plies.

2. The multi-grade linear draw support post of claim 1, wherein the relatively low-grade ply is embossed with a plurality of discrete embossments spaced apart along length and width directions of the ply for increasing an effective caliper of the ply.

3. The multi-grade linear draw support post of claim 1, wherein there are a plurality of relatively low-grade plies radially positioned between the relatively higher-grade plies.

4. The multi-grade linear draw support post of claim 3, wherein at least one of the relatively low-grade plies is embossed with a plurality of discrete embossments spaced apart along length and width directions of the ply for increasing an effective caliper of the ply.

5. The multi-grade linear draw support post of claim 3, wherein two of the relatively low-grade plies are each embossed with a plurality of discrete embossments spaced apart along length and width directions of each ply for increasing an effective caliper of each ply.

6. The multi-grade linear draw support post of claim 5, wherein the two embossed relatively low-grade plies are separated by an intermediate non-embossed ply.

7. The multi-grade linear draw support post of claim 2, wherein there are a plurality of plies radially outward of the embossed relatively low-grade ply.

8. The multi-grade linear draw support post of claim 2, wherein there are a plurality of plies radially inward of the embossed relatively low-grade ply.

9. The multi-grade linear draw support post of claim 1, wherein the relatively low-grade ply is corrugated for increasing an effective caliper of the ply.

10. The multi-grade linear draw support post of claim 9, wherein flutes of the corrugated low-grade ply extend parallel to the axis of the support post.

11. The multi-grade linear draw support post of claim 1, wherein there are a plurality of low-grade plies radially positioned between the relatively higher-grade plies, and the low-grade plies include two corrugated plies separated by an intervening non-corrugated ply.

12. A method for making a multi-grade support post, comprising the steps of:
providing a mandrel that extends along an axis;
advancing an inner paperboard ply parallel to the axis of the mandrel while wrapping the inner ply about the mandrel such that opposite side edges of the inner ply are proximate each other and are parallel to the axis of the mandrel;
advancing from one to a plurality of intermediate paperboard plies parallel to the axis of the mandrel while wrapping the or each intermediate ply about the inner paperboard ply on the mandrel such that opposite side edges of the or each intermediate ply are proximate each other and are parallel to the axis of the mandrel;
advancing an outer paperboard ply parallel to the axis of the mandrel while wrapping the outer ply about the mandrel such that opposite side edges of the outer ply are proximate each other and are parallel to the axis of the mandrel; and
joining the inner, intermediate, and outer plies together with adhesive to form a tube on the mandrel, the tube being drawn linearly along the mandrel;
wherein the inner and outer plies comprise relatively higher-grade paperboard, and at least one intermediate ply comprises a relatively low-grade paperboard.

13. The method of claim 12, wherein at least one intermediate relatively low-grade ply is provided with discrete embossments spaced apart along length and width directions of the ply, which embossments increase an effective caliper of the ply.

14. The method of claim 13, wherein there are a plurality of intermediate relatively low-grade plies provided with embossments.

15. The method of claim 14, wherein a non-embossed ply is positioned between two embossed plies.

16. The method of claim 12, further comprising the steps of deforming the tube after removing the tube from the mandrel but before the adhesive sets so as to form a desired cross-sectional shape in the tube, and allowing the adhesive to set while the tube is in the deformed shape.

17. A linear draw support post for supporting axial loads imposed on the post, the support post comprising:
a plurality of separate paperboard plies wrapped one upon another about an axis and adhered together to form a tube, wherein opposite edges of each ply extend parallel to the axis;
wherein at least one ply located radially between two other plies is embossed with a plurality of discrete embossments spaced apart along length and width directions of the ply for increasing an effective caliper of the ply.

18. The linear draw support post of claim 17, wherein there are at least two embossed plies located radially between other plies.

19. The linear draw support post of claim 18, wherein the two embossed plies are non-contiguous with each other.

20. The linear draw support post of claim 17, wherein the embossed ply comprises relatively low-grade paperboard and the two other plies comprise relatively higher-grade paperboard.

21. A linear draw support post for supporting axial loads imposed on the post, the support post comprising:
a plurality of separate paperboard plies wrapped one upon another about an axis and adhered together to form a tube, wherein opposite edges of each ply extend parallel to the axis;
wherein at least one ply located radially between two other plies is corrugated for increasing an effective caliper of the ply.

22. The linear draw support post of claim 21, wherein at least two of the plies are corrugated.

23. The linear draw support post of claim 22, wherein said at least two corrugated plies are separated by an intervening non-corrugated ply.

24. A linear draw support post for supporting axial loads imposed on the post, the support post comprising:
a plurality of separate paperboard plies wrapped one upon another about an axis and adhered together to form a tube, wherein opposite edges of each ply extend parallel to the axis;
wherein at least one ply is relatively narrow in relation to other plies of the tube, said relatively narrow ply thickening a localized region of the tube relative to other regions of the tube.

25. A process for making a support post, comprising the steps of:
providing a mandrel that extends along an axis;
advancing a plurality of paperboard plies parallel to the axis of the mandrel while wrapping each ply, one upon another, about the mandrel such that opposite side edges of each ply are parallel to the axis of the mandrel; and
joining the plies together with adhesive to form a tube on the mandrel, the tube being drawn linearly along the mandrel;
wherein at least one of the paperboard plies is substantially narrower than other plies of the tube so as to thicken and thereby reinforce a localized region of the tube.
